# EUROPÄISCHE PATENTSCHRIFT

(11) **EP 1 396 359 B1**
(45) Veröffentlichungstag und Bekanntmachung des Hinweises auf die Patenterteilung: **11.10.2006**
(21) Anmeldenummer: 03014778.9
(22) Anmeldetag: 28.06.2003
(51) Int. Cl.: B60G 17/052, B60G 17/08, B60G 13/10, F15B 3/00

(54) **Kraftfahrzeug-Luftfedersystem mit Dämpfer**
Vehicle air suspension system with damper
Sytème de suspension à air pour véhicules avec amortisseur

(30) Priorität: 07.09.2002 DE 10241490
(43) Veröffentlichungstag der Anmeldung: 10.03.2004
(73) Patentinhaber: ContiTech Luftfedersysteme GmbH, 30165 Hannover (DE)
(72) Erfinder: Thurow, Gerhard, 30823 Garbsen (DE)
(74) Vertreter: Finger, Karsten

(56) Entgegenhaltungen:
- EP-A- 0 257 779
- DE-A1- 3 730 000
- DE-A1- 4 311 243
- DE-A1- 4 423 884
- DE-A1- 19 841 808
- PATENT ABSTRACTS OF JAPAN Bd. 007, Nr. 275 (M-261), 8. Dezember 1983 (1983-12-08) & JP 58 152616 A (NIPPON DENSO KK), 10. September 1983 (1983-09-10)
- PATENT ABSTRACTS OF JAPAN Bd. 017, Nr. 414 (M-1456), 3. August 1993 (1993-08-03) & JP 05 085135 A (MAZDA MOTOR CORP), 6. April 1993 (1993-04-06)

## Beschreibung

Die Erfindung bezieht sich auf ein Kraftfahrzeug-Luftfedersystem, bestehend aus einem Kompressor, mindestens einer Luftfeder mit Niveauregeleinrichtung und mindestens einem Luftdämpfer.

Eine solche Vorrichtung nach dem Oberbegriff des Anspruchs 1 ist aus EP-A-0 257 779 bekannt.

Ist bei einem Luftfedersystem der Dämpfer nicht mit einer Hydraulik-Flüssigkeit sondern mit Luft als dämpfendem Medium gefüllt, so wird für einen solchen Luftdämpfer zwecks optimaler Dämpfung ein von dem Luftfederdruck unterschiedlicher, nämlich höherer Druck benötigt. Dabei sollte dieser höhere Druck nicht konstant sondern lastabhängig dem jeweiligen Beladungszustand des Fahrzeugs angepasst sein.

Da man bisher die Meinung vertreten hat, einen speziellen Dämpferdruck nur mit Hilfe eines zusätzlichen Kompressors bereitstellen zu können, ein zusätzlicher Kompressor aber eine unzumutbare Verteuerung verursachen würde, hat man bisher auf die Verwendung von Luftdämpfern in Luftfedersystemen verzichtet.

Gemäß Anspruch 1 ist das Problem dadurch gelöst, dass zwischen dem für die Luftfeder vorhandenen Kompressor und dem Dämpfer ein Druckübersetzer zwischengeschaltet ist, wobei der Dämpfer als Luftdämpfer ausgebildet ist.

Druckübersetzer sind an sich bekannt. So beschreibt z. B. die DE-A-26 46 286 einen Druckübersetzer für Druckluftbremsen von Schienenfahrzeugen.
Mit Hilfe dieses Druckübersetzers lässt sich auch mit geringen (Primär-)Drücken seitens des Kompressors auf der Sekundärseite des Druckübersetzers eine hinreichend große Stellkraft zur Aktivierung der Bremse erzielen.

Der Vorteil der erfindungsgemäßen Verwendung eines Druckübersetzers zum Betrieb eines Luftdämpfers in einem Kraftfahrzeug-Luftfeder-System besteht zunächst einmal darin, dass erfindungsgemäß auf einen zusätzlichen Kompressor zur Erzeugung des für den Luftdämpfer erforderlichen Drucks verzichtet werden kann.

Wie sich insbesondere aus Anspruch 2 ergibt, weist der erfindungsgemäß verwendete Druckübersetzer vorzugsweise kein konstantes sondern ein variables Druckverhältnis zwischen Primär- und Sekundärseite auf.

Ein Druckübersetzer mit variablem Druckverhältnis ist aus der DE-C-32 08 151 bekannt. Dabei handelt es sich um einen Druckübersetzer für pneumatische oder hydraulische Antriebe, der in der Lage ist, sekundärseitig einen *gleichbleibenden* Über- bzw. Unterdruck auch dann zu erzeugen, wenn der zu verstärkende Primärdruck variabel ist.

Wie eingangs geschildert, verfolgt die vorliegende Erfindung ein entgegengesetztes Ziel, nämlich Erzeugung eines relativen Sekundärdrucks. Nach einer bevorzugten Ausführungsform soll dabei anstelle eines konstanten Druckverhältnisses eine nichtproportionale Druckübersetzung realisiert werden.

Um mit Luft als Dämpfungsmedium arbeiten zu können, ist ein höherer Druckbereich, z. B. 25 bis 35 bar erforderlich. Bei Erhöhung des Luftdrucks erhöht sich die dämpfende Wirkung.

Aus Komfortgründen ist es wünschenswert, die Dämpfung des Fahrzeugs mit dem Beladungszustand zu verändern, um das Optimum an Komfort zu erzielen. Luftgefederte Fahrzeuge verfügen über einen Kompressor zur Versorgung der Luftfeder mit Pressluft. Über eine Niveauregulierung, die das Fahrzeug immer auf gleicher Höhe über der Fahrbahn hält, wird der Druck des Kompressors gesteuert. Somit ist eine Abhängigkeit zwischen Systemdruck und Beladungsverhältnis gegeben. Der Systemdruck schwankt z. B. zwischen 6 und 10 bar.

Für den Druckübersetzer ergeben sich damit folgende Verhältnisse:
Wenn auf der Niederdruckseite (Systemdruck) 6 bar vorhanden sind, sollen auf der Hochdruckseite 25 bar anstehen (Leerlast).
Bei 10 bar auf der Niederdruckseite entsprechend 35 bar auf der Hochdruckseite (Volllast).

Die Darstellung des erfindungsgemäßen Luftfedersystems und insbesondere der darin verwendete Druckübersetzer werden anhand der beigefügten Zeichnungen beschrieben.
Es zeigt:
Fig. 1 den Prinzipaufbau des erfindungsgemäßen Luftfedersystems;
Fig. 2 einen Längsschnitt durch eine bevorzugten Ausführungsform des verwendeten Druckübersetzers bei Maximaldruck; und
Fig. 3 einen Längsschnitt durch denselben Druckübersetzer bei Minimaldruck.

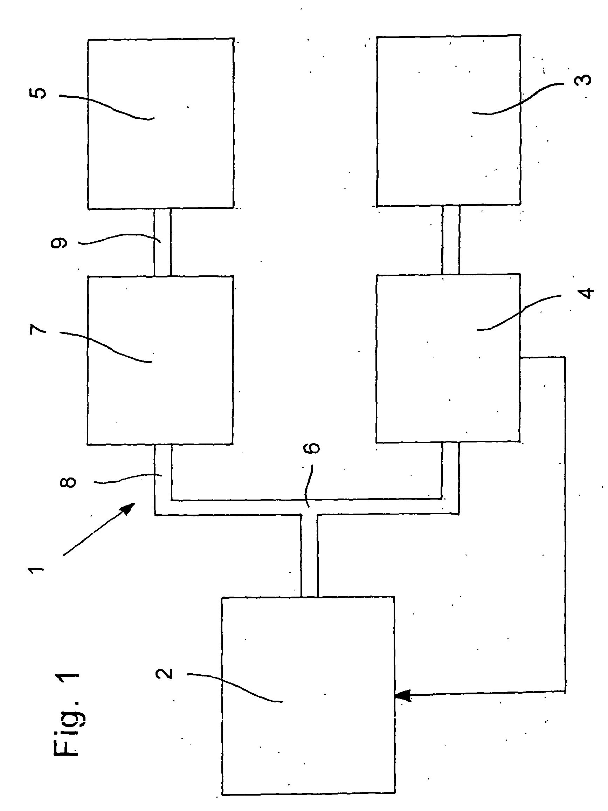

Das in Fig. 1 als Blockdiagramm dargestellte Luftfedersystem 1 besteht aus einem Kompressor 2, (mindestens) einer Luftfeder 3 mit Niveauregeleinrichtung 4 und (mindestens) einem Dämpfer 5.
Bei dem Dämpfer 5 handelt es sich um einen Luftdämpfer, der von dem Luftfeder-Kompressor 2 über eine Abzweigung 6 und unter Zwischenschaltung eines Druckübersetzers 7 ebenfalls mit Druckluft beaufschlagbar ist.
Der Druckübersetzer 7 ist damit Teil eines erfindungsgemäßen Kraftfahrzeug-Luftfedersystems 1 mit lastabhängiger Luftdämpfung innerhalb des Luftdämpfers 5.
Mit "8" ist die Niederdruckseite und mit "9" die Hochdruckseite gekennzeichnet.

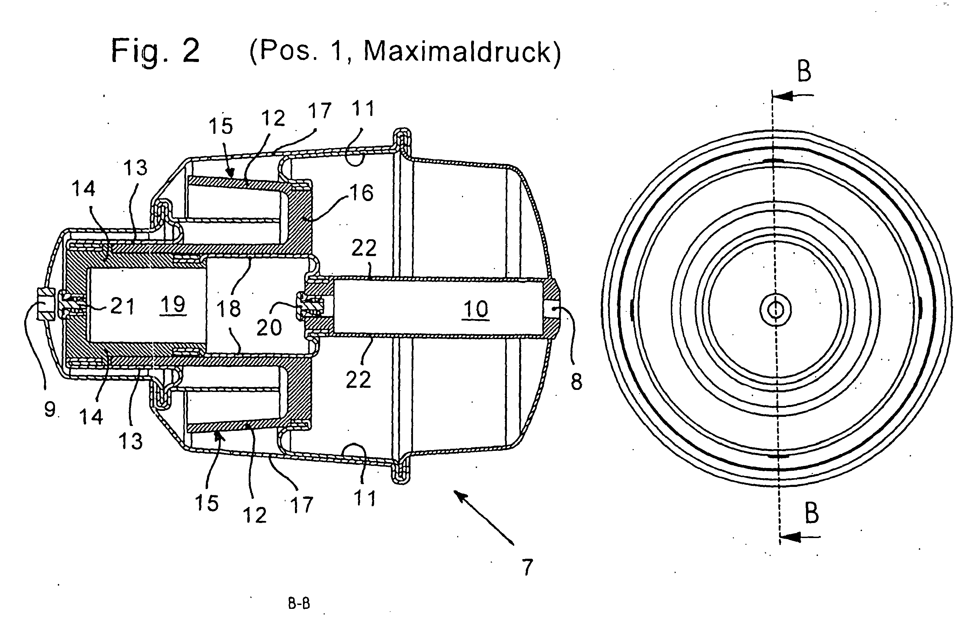

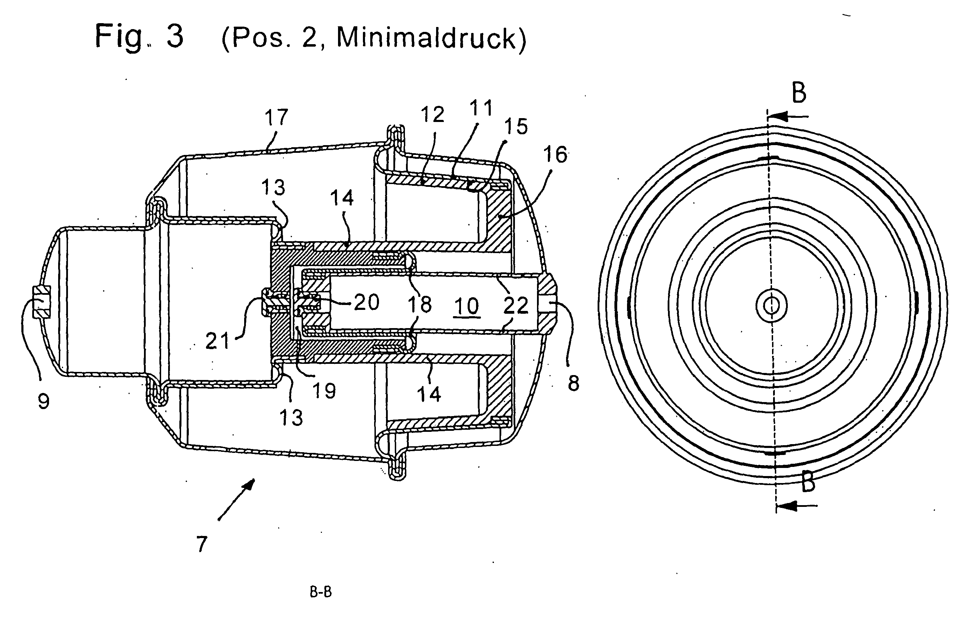

Der in Fig. 2 und Fig. 3 dargestellte Druckübersetzer 7 dient zur Versorgung des Luftdämpfers 5 mit erhöhtem Luftdruck. Dabei ist die Hochdruckseite 9 mit einem geschlossenen Druckraum 10 verbunden, in dem der Druck in Abhängigkeit vom Niederdruck (Niederdruckseite 8) variiert werden soll. Der Druck an der Niederdruckseite 8 wird von einem externen Signal gesteuert (Niveauregeleinrichtung 4, Fig. 1). Bei einer Niveau-Regulierung für einen PKW wird z. B. der Druck auf der Niederdruckseite 8 durch die Zuladung des Fahrzeugs bestimmt.

Das Übersetzungsverhältnis des Druckübersetzers 7 ist das Flächenverhältnis der Niederdruck-Wirkfläche zur Hochdruck-Wirkfläche. Im Unterschied zu gebräuchlichen Druckübersetzern mit Kolben/Zylinder-Anordnungen und gleitenden Dichtungen, weist das erfindungsgemäße Luftfedersystem 1 einen Druckübersetzer 7 mit Rollbälgen 11, 13 und Abrollkolben 12, 14 auf. D. h.: Auf der Niederdruckseite 8 arbeitet ein großer Abrollkolben 12 mit konischer Abrollfläche 15. Über die Neigung dieser Fläche 15 ist das Übersetzungsverhältnis des Druckübersetzers 7, abhängig von der Stellung des beweglichen Innenteils 16, auf denen die Rollbälge 11, 13 abrollen, variabel.

Da der Quotient aus Hochdruck / Niederdruck für verschiedene Betriebszustände nicht gleich ist, wird beim Druckübersetzer 7 der Wirkdurchmesser der Niederdruckmembran 11 (größter Rollbalg in der Einheit), über dem Hub verändert. Die Niederdruckmembran 11 läuft auf dem konischen Kolben 12 in einer konischen Glocke 17. Dadurch ist es möglich, variable Druckverhältnisse zu erzielen und die geforderten Drücke zu erreichen.

Die Hochdruckseite 9 des Druckübersetzers 7 ist über eine Rohrleitung direkt mit einem oder mehreren Stoßdämpfern 5 verbunden. Es besteht keine direkte Verbindung zum Kompressor 2.

Bei unvermeidlichem Druckverlust durch Diffusion oder Leckage muss das Volumen aufgefüllt werden.
Zum Ausgleich dieses Druckabfalls ist vorzugsweise ein dritter Rollbalg (Nachfüllbalg) 18 vorhanden. Das Ausgleichen der Leckverluste geschieht mit dem dritten kleinen Rollbalg 18 und zwei Rückschlagventilen 20, 21. Die Befüllung des Innenraums 19 erfolgt bei hohem Systemdruck.

Dieser Ausgleichsbalg 18 wird in der Position 1 (Fig. 2), wenn der Druckübersetzer 7 mit maximalem Niederdruck in der Endstellung steht, befüllt. Das Kompressionsverhältnis des Ausgleichsbalges 18 ist so abgestimmt, dass in der Endstellung bei minimalem oder fehlendem Niederdruck, im Ausgleichsbalg 18 der minimale Druck der Hochdruckseite 9 vorhanden ist.
Unter Maximaldruck, d. h. in der Position 1, ist der Nachfüllbalg 18 ganz ausgefahren. Über das Rückschlagventil 20 im feststehenden Abrollkolben 22 strömt Luft mit hohem Systemdruck (10 bar) in den Innenraum 19 des Nachfüllbalges 18. Bei nachlassendem Systemdruck wird die Luft im Nachfüllbalg 18 komprimiert.

Wenn der Druck im Hochdruckbereich 9 abgefallen ist, strömt Medium in der Position 2 (Fig. 3) aus dem Ausgleichsbalg 18 über das Rückschlagventil 21 in den Hochdruckbereich 9. Sinkt der Systemdruck auf 6 bar oder tiefer, ist das Volumen im Nachfüllbalg auf 25 bar angestiegen. Ist der Druck auf der Hochdruckseite des Druckübersetzers 7 durch Diffusion oder Leckage unter 25 bar abgesunken, strömt Luft aus dem Nachfüllbalg 18 über das zweite Rückschlagventil 21 zur Hochdruckseite 9. Zur Erreichung des richtigen Innendrucks im Nachfüllbalg 18 (25 bar) bei minimalem Systemdruck, ist es erforderlich, dass das Gesamtvolumen des Nachfüllbalges 18 zum Hubvolumen richtig abgestimmt ist (Verdichtungsverhältnis).
Das gleiche gilt für die Auslegung der Hochdruckseite 9 des Druckübersetzers 7.

### Bezugszeichenliste

### (ist Teil der Beschreibung)

- 1: Kraftfahrzeug-Luftfedersystem
- 2: Kompressor
- 3: Luftfeder
- 4: Niveauregeleinrichtung
- 5: (Luft-)Dämpfer
- 6: Abzweigung
- 7: Druckübersetzer
- 8: Niederdruckseite (Rohrleitung), Niederdruckbereich
- 9: Hochdruckseite ( " ), Hochdruckbereich
- 10: (geschlossener) Druckraum
- 11: Rollbalg, Niederdruckmembran
- 12: (konischer) Abrollkolben
- 13: Rollbalg
- 14: Abrollkolben
- 15: Abrollfläche
- 16: (bewegliches) Innenteil
- 17: konische Glocke
- 18: (dritter) Rollbalg, Ausgleichsrollbalg, Nachfüllbalg
- 19: Innenraum des Nachfüllbalgs
- 20: Rückschlagventil
- 21: Rückschlagventil
- 22: feststehender Abrollkolben

## Patentansprüche

1. Kraftfahrzeug-Luftfedersystem (1),
bestehend aus einem Kompressor (2), mindestens einer Luftfeder (3) mit Niveauregeleinrichtung (4) und mindestens einem Luftdämpfer (5),
**dadurch gekennzeichnet,**
**dass** der mindestens eine Luftdämpfer (5)
über einen Druckübersetzer (7) an den Kompressor (2) angeschlossen ist.

2. Luftfedersystem nach Anspruch 1,
**dadurch gekennzeichnet,**
**dass** an dem Druckübersetzer (7) ein variables Druckübersetzungsverhältnis einstellbar ist.

3. Luftfedersystem nach Anspruch 1 oder 2,
**dadurch gekennzeichnet,**
**dass** der Sekundärdruck des Druckübersetzers (7) mit Hilfe des Hubs eines beweglichen Innenteils (16) veränderbar ist.

4. Luftfedersystem nach einem der Ansprüche 1 bis 3,
**dadurch gekennzeichnet,**
**dass** zur Druckübersetzung innerhalb des Druckübersetzers (7) mindestens eine Rollbalg/Abrollkolben-Anordnung (11, 12) vorgesehen ist.

5. Luftfedersystem nach Anspruch 4,
**dadurch gekennzeichnet,**
**dass** der mindestens eine Abrollkolben (12) der mindestens einen Rollbalg/Abrollkolben-Anordnung (11, 12) eine konische Abrollfläche (15) aufweist.

6. Luftfedersystem nach einem der Ansprüche 1 bis 5,
**dadurch gekennzeichnet,**
**dass** der Druckübersetzer (7) eine konische Glocke (17) aufweist.

7. Luftfedersystem nach einem der Ansprüche 1 bis 6,
**dadurch gekennzeichnet,**
**dass** der Druckübersetzer (7) für Hochdruck ausgelegt ist.

8. Luftfedersystem nach einem der Ansprüche 1 bis 7,
**dadurch gekennzeichnet,**
**dass** zum Ausgleich von Druckverlust ein dritter Rollbalg (Ausgleichsrollbalg, 18) vorgesehen ist.

9. Luftfedersystem nach einem der Ansprüche 1 bis 8,
**dadurch gekennzeichnet,**
**dass** das Kompressionsverhältnis des Ausgleichsbalgs (18) so abgestimmt ist, dass in seiner Endstellung bei minimalem oder fehlendem Niederdruck, im Ausgleichsbalg (18) der minimale Druck der Hochdruckseite (9) vorhanden ist.

10. Luftfedersystem nach einem der Ansprüche 1 bis 9,
**dadurch gekennzeichnet,**
**dass** der Druckübersetzer (7) so ausgelegt ist, dass er bei einem Primärdruck von 6 bar einen Sekundärdruck von 25 bar und bei einem Primärdruck von 25 bar einen Sekundärdruck von 35 bar erzeugt.

## Claims

1. Motor vehicle air suspension system (1),
comprising a compressor (2), at least one air spring (3) with levelling control device (4) and at least one air damper (5),
**characterized in that**
at least one air damper (5) is connected to the compressor (2) by way of a pressure intensifier (7).

2. Air suspension system according to Claim 1,
**characterized in that**
a variable pressure ratio can be set on the pressure intensifier (7) .

3. Air suspension system according to Claim 1 or 2,
**characterized in that**
the secondary pressure of the pressure intensifier (7) can be varied by means of the lift of a moveable internal part (16).

4. Air suspension system according to any one of Claims 1 to 3,
**characterized in that**
at least one U-bellows/rolling piston arrangement (11, 12) is provided for the transmission of pressure inside the pressure intensifier (7).

5. Air suspension system according to Claim 4,
**characterized in that**
at least one rolling piston (12) of the at least one U-bellows/rolling piston arrangement (11, 12) has a conical rolling face (15).

6. Air suspension system according to any one of Claims 1 to 5,
**characterized in that**
the pressure intensifier (7) has a conical cap (17).

7. Air suspension system according to any one of Claims 1 to 6,
**characterized in that**
the pressure intensifier (7) is designed for high pressure.

8. Air suspension system according to any one of Claims 1 to 7,
**characterized in that**
a third U-bellows (compensating U-bellows, 18) is provided for the compensation of pressure loss.

9. Air suspension system according to any one of Claims 1 to 8,
**characterized in that**
the compression ratio of the compensating U-bellows (18) is adjusted so that in its limit position, in the event of a minimum low pressure or the absence thereof, the minimum pressure on the high-pressure side (9) is available in the compensating bellows (18).

10. Air suspension system according to any one of Claims 1 to 9,
**characterized in that**
the pressure intensifier (7) is designed so that at a primary pressure of 6 bar it generates a secondary pressure of 25 bar and at a primary pressure of 25 bar it generates a secondary pressure of 35 bar.

## Revendications

1. Système de suspension à air (1) pour véhicule automobile, constitué d'un compresseur (2), d'au moins une suspension à air (3) avec un dispositif de régulation de niveau (4) et au moins un amortisseur à air (5),
**caractérisé en ce que**
l'au moins un amortisseur à air (5) est raccordé au compresseur (2) par le biais d'un multiplicateur de pression (7).

2. Système de suspension à air selon la revendication 1,
**caractérisé en ce**
**qu'**un rapport de multiplication de pression variable peut être ajusté sur le multiplicateur de pression (7).

3. Système de suspension à air selon la revendication 1 ou 2,
**caractérisé en ce que**
la pression secondaire du multiplicateur de pression (7) peut être modifiée à l'aide de la course d'une partie interne mobile (16).

4. Système de suspension à air selon l'une quelconque des revendications 1 à 3,
**caractérisé en ce que**
pour la multiplication de pression à l'intérieur du multiplicateur de pression (7), on prévoit au moins un système de soufflet roulant/piston de déroulage (11, 12).

5. Système de suspension à air selon la revendication 4,
**caractérisé en ce que**
l'au moins un piston de déroulage (12) de l'au moins un système de soufflet roulant/piston de déroulage (11, 12) présente une surface de déroulage conique (15).

6. Système de suspension à air selon l'une quelconque des revendications 1 à 5,
**caractérisé en ce que**
le multiplicateur de pression (7) présente une cloche conique (17).

7. Système de suspension à air selon l'une quelconque des revendications 1 à 6,
**caractérisé en ce que**
le multiplicateur de pression (7) est conçu pour une haute pression.

8. Système de suspension à air selon l'une quelconque des revendications 1 à 7,
**caractérisé en ce que**
l'on prévoit un troisième soufflet roulant (soufflet roulant de compensation 18) pour la compensation des pertes de pression.

9. Système de suspension à air selon l'une quelconque des revendications 1 à 8,
**caractérisé en ce que**
le rapport de compression du soufflet de compensation (18) est adapté de telle sorte que dans sa position d'extrémité pour une basse pression minimale ou inexistante, la pression minimale du côté haute pression (9) soit présente dans le soufflet de compensation (18).

10. Système de suspension à air selon l'une quelconque des revendications 1 à 9,
**caractérisé en ce que**
le multiplicateur de pression (7) est conçu de telle sorte que pour une pression primaire de 6 bars, il produise une pression secondaire de 25 bars et que pour une pression primaire de 25 bars il produise une pression secondaire de 35 bars.
